# EUROPEAN PATENT APPLICATION

(11) **EP 4 813 759 A1**
(43) Date of publication of application: **30.09.2026**
(21) Application number: 26160312.0
(22) Date of filing: 24.02.2026
(51) Int. Cl.: B60R 16/023, B60R 7/08

(54) **WORKING VEHICLE**

(30) Priority: 27.03.2025 JP 2025054175
(71) Applicant: Takeuchi Mfg. Co., Ltd., Nagano 389-0605 (JP)
(72) Inventor: MARUYAMA, Shota, Hanishina-gun, Nagano, 389-0605 (JP); SHIOIRI, Yuichi, Hanishina-gun, Nagano, 389-0605 (JP)
(74) Representative: Winter, Brandl - Partnerschaft mbB

(57) **Abstract**

A working vehicle (1) includes a cabin (16) provided with a seat (19) where an operator sits, wherein the cabin (16) has therein a fuse box (60) for accommodating a fuse (70) of an electrical component. The fuse box (60) has a main body (60A) whose inside is an accommodation space, has an opening (60a) formed at a front or lateral side of the main body (60A) for attaching and detaching the fuse (70), and is provided with a cover (60B) openable and closable in relation to the opening (60a). The cover (60B) is provided with a space part (60d) for storing a document (M) and configured to be used also as a document case. The space part (60d) is defined between a back part (60k) on a distal side from the seat (19) and a front part (601) on a proximal side from the seat (19).

## Description

### Technical Field

The present invention relates to a working vehicle.

### Background Art

As an example of a working vehicle, a hydraulic excavator, a track loader or the like having a lower body with a traveling crawler or tire installed thereon, an upper body arranged above the lower body, and a working device installed at the lower body or the upper body and operating hydraulically (that is, with hydraulic oil having a predetermined pressure) is known according to the related art.

Recently, a working vehicle having an electric motor instead of a conventional engine as a drive source of a working device has been developed (refer to JP-A-2023-23324).

### Summary of Invention

### Technical Problem

Normally, as the working vehicle becomes smaller, the space where a device is installed becomes narrower. Therefore, the configuration and arrangement of the device and the securing of an installation space therefor are persistent problems.

In the presence of such problems, for example, in a working vehicle with a configuration having an electric motor or a configuration having an air-conditioning mechanism (an air-conditioning device or a heater device) or the like inside a cabin, the number of electrical devices installed increases and the number of fuses for these electrical devices tends to increase accordingly. In the supply of electric power to the heater device, the current can be reduced by using a rechargeable battery (lithium-ion rechargeable battery) with higher voltage than a lead-acid rechargeable battery and therefore large-sized fuses need to be used.

Therefore, since the fuses tend to increase in number and size, the configuration and arrangement of a fuse box for accommodating the fuses and the securing of an installation space therefor are significant problems. Particularly, the fuse is a component on which maintenance (inspection, and attachment and detachment) is performed at a high frequency, and therefore needs to have a configuration and arrangement that enables good workability of maintenance.

In a configuration with a relatively small number of electrical devices installed, for example, there is some room for working out an installation space inside a seat box below a seat, and therefore the above-described fuse box as an example and a storage (document case or the like) as another example can be installed. However, as the number of electrical devices installed relatively increases as described above, these electrical devices and connection cables or the like must be installed inside the seat box, posing a problem in that the fuse box and the document case or the like cannot be installed or difficult to install.

Even if by any chance the fuse box and the document case or the like can be installed inside the seat box, since it is the position below the seat, there is a problem in that removing the cover from the fuse box and visually checking the inside thereof, and carrying out the inspection and the attachment and detachment of the fuse, are tasks that are difficult to perform and take effort. Also, there is a problem in that even when the operator wants to refer to a document (specifically, an instruction manual) during work using a working device, the operator in the state of being seated at the seat cannot (or finds it hard to) open and close a storage door or the like provided on the seat box and take out and put in the document.

### Solution to Problem

The present invention has been accomplished under the above-described circumstances and an object thereof is to provide a working vehicle in which a fuse box and a document case can be installed inside a cabin and in which the maintenance of a fuse can be carried out easily and a document can be taken out and put in easily.

The present invention solves the above-described problems by a solution as described below as an embodiment.

A working vehicle according to an embodiment is a working vehicle including a cabin provided with a seat on which an operator sits, wherein the cabin has therein a fuse box in which a fuse of an electrical component is accommodated, the fuse box has a main body whose inside is an accommodation space, has an opening formed at a front side or a lateral side of the main body for carrying out an inspection and attachment and detachment of the fuse, and is provided with a cover that can open and close in relation to the opening, the cover is provided with a space part for storing a document and is configured to be used also as a document case, and the space part is defined between a back part of the cover, which is on a distal side from the seat, and a front part of the cover, which is on a proximal side from the seat.

### Advantageous Effects of Invention

In the working vehicle according to the embodiment, a fuse box and a document case can be installed inside the cabin. Also, the maintenance of a fuse can be carried out easily and a document can be taken out and put in easily. Brief Description of Drawings
Fig. 1 is a perspective view showing an example of a working vehicle according to an embodiment of the present invention.
Fig. 2 is a perspective view showing an example of a cabin of the working vehicle shown in Fig. 1.
Fig. 3 is a perspective view showing an example of the cabin of the working vehicle shown in Fig. 1.
Fig. 4 is a cross-sectional view taken along a line IV-IV in Fig. 2.
Fig. 5A is a perspective view showing an example of a fuse box (in a state of not storing a document) in the cabin of the working vehicle shown in Fig. 1.
Fig. 5B is a perspective view showing an example of the fuse box (in a state of storing a document) in the cabin of the working vehicle shown in Fig. 1.

### Description of Embodiments

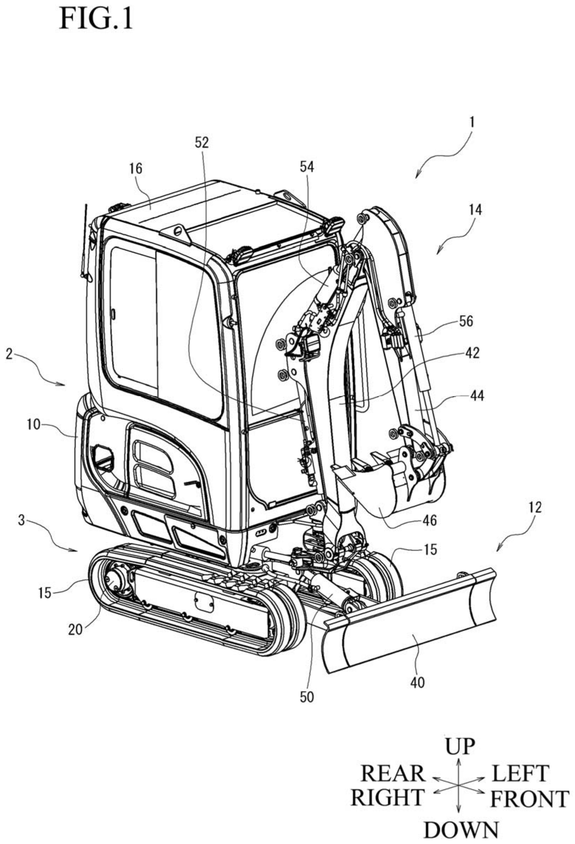

Hereinafter, an embodiment of the present invention will be described in detail with reference to the drawings. Fig. 1 is a schematic view (perspective view from above a right front part) showing an example of a working vehicle 1 according to the present embodiment. For the sake of convenience of description, there are cases where upward and downward, left and right, and forward and backward directions are indicated by arrows in the drawings. Also, there are cases where members having the same function are denoted by the same sign in all the drawings for illustrating the embodiment and the repeated description thereof is omitted.

First, the overall configuration of the working vehicle 1 will be described. A hydraulic excavator will be described as an example of the working vehicle 1. However, the working vehicle 1 is not limited to the hydraulic excavator.

As shown in Fig. 1, the working vehicle 1 has a lower body 3 provided with a traveling device, and an upper body 2 arranged above the lower body 3. This working vehicle 1 has working devices 12, 14 that operate hydraulically (with hydraulic oil having a predetermined pressure). Also, a cabin 16 provided with an operation device with which an operator on board carries out operations for traveling and work is provided. The cabin 16 is assumed to be a closed type (cabin) but may also be an open type (canopy).

As an example of the traveling device, a pair of left and right crawlers 15 are provided. However, the traveling device is not limited to the crawlers 15 and may employ a configuration having tires instead of the crawlers 15 (not illustrated). The crawlers 15 are driven by a traveling hydraulic motor 20.

As an example of the working device 12, a blade 40 is provided. The blade 40 is installed at the lower body 3 so as to be able to swing upward and downward (including forward and backward components). The blade 40 is driven by a hydraulic cylinder (blade cylinder) 50. However, the working device 12 is not limited to the above-described configuration.

As an example of the working device 14, a boom 42, an arm 44, and an attachment (in the present embodiment, a bucket) 46 are provided. However, the attachment 46 is not limited to the bucket. The boom 42 is installed at the upper body 2 so as to be able to swing upward and downward (including forward and backward components) (a boom bracket may or may not be provided in between). The arm 44 is installed at the boom 42 so as to be able to swing upward and downward (including forward and backward components). The attachment 46 is installed at the arm 44 so as to be able to swing upward and downward (including forward and backward components). The boom 42 is driven by a hydraulic cylinder (boom cylinder) 52. The arm 44 is driven by a hydraulic cylinder (arm cylinder) 54. The attachment 46 is driven by a hydraulic cylinder (bucket cylinder) 56. However, the working device 14 is not limited to the above-described configuration.

The working vehicle 1 has a drive source, a hydraulic pump, and a control valve or the like (none of which is illustrated) inside a device compartment 10 or the like, as a drive mechanism for driving the above-described traveling hydraulic motor 20 and hydraulic cylinders 50, 52, 54, 56. One or a plurality of hydraulic pumps are provided in accordance with the configurations, loads and the like of the working devices 12, 14 and the traveling device or the like.

In the working vehicle 1 having the above-described configuration, the operator operates the operation device and thus performs control to activate the control valve to supply hydraulic oil with a predetermined pressure sent out from the hydraulic pump to the traveling hydraulic motor 20 and the hydraulic cylinders 50, 52, 54, 56. Thus, the traveling of the working vehicle 1 and the work by the working devices 12, 14 can be performed.

The working vehicle 1 has an electric motor as the above-described drive source (not illustrated). As another example of the drive source, a configuration in which an engine (internal combustion engine) is provided instead of the electric motor or along with the electric motor may be employed (not illustrated).

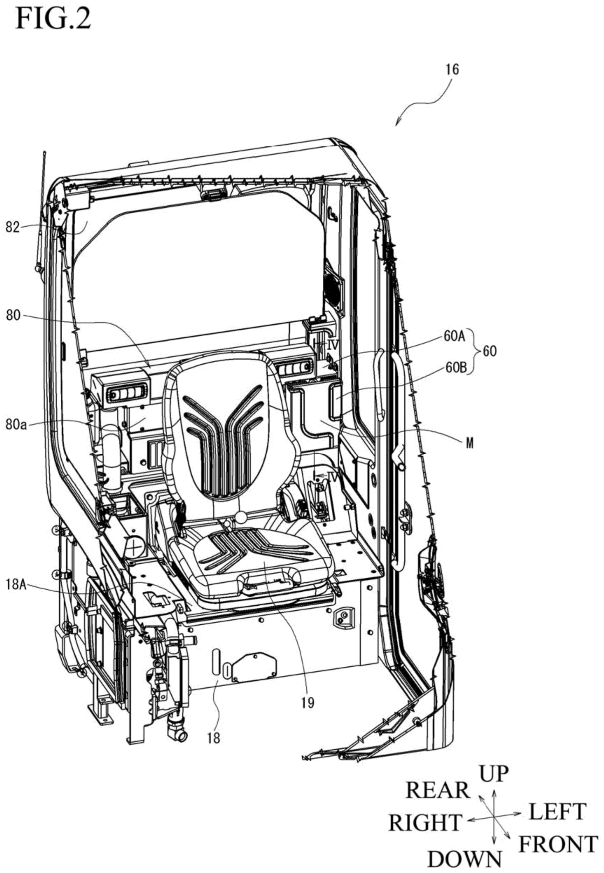

Next, the configuration of the cabin 16 will be described. Fig. 2 is a perspective view (perspective view from above a right front part) of the inside of the cabin 16. The cabin 16 has a seat 19 on which the operator sits. This seat 19 is installed on a seat plate 18A arranged on a seat box 18 fixed to a floor plate (not illustrated). Also, various operation devices (not illustrated) with which the operator performs operations for work and traveling or the like are provided.

Also, the cabin 16 has a heater device 80 that supplies warm air to inside the cabin and performs heating and defrosting of a window glass. As an example, the heater device 80 has a heater core (or may be a heater element) to be a heat generator and a blowing fan (neither of which is illustrated), inside a casing 80a. Thus, air is heated by the heater core and warm air is generated. Also, the generated warm air is made to blow (sent out) by the fan.

The heater device 80 according to the present embodiment is arranged so as to form an inner wall (rear inner wall) of the cabin 16, at a position below a rear window glass 82 inside the cabin 16. The "position below" refers to such a position that the upper end of the heater device 80 is lower than the lower end of the rear window glass 82, but is not strictly limited to a lower position and includes an equivalent height position. Also, this position is not limited to "directly below".

With this configuration, since an air outlet directly connected (almost directly connected) to the heater device 80 can be arranged at a position below (almost directly below) the rear window glass 82, the defrosting of this rear window glass 82 and the heating of the periphery of the seat 19 (particularly in the rear of the backrest) can be effectively performed. Particularly, since a powerful defrosting effect is achieved, the use of a glass with an embedded heat wire for the rear window glass 82 is unnecessary and accordingly an energizing device for the heat wire is unnecessary, and therefore a significant cost reduction can be achieved.

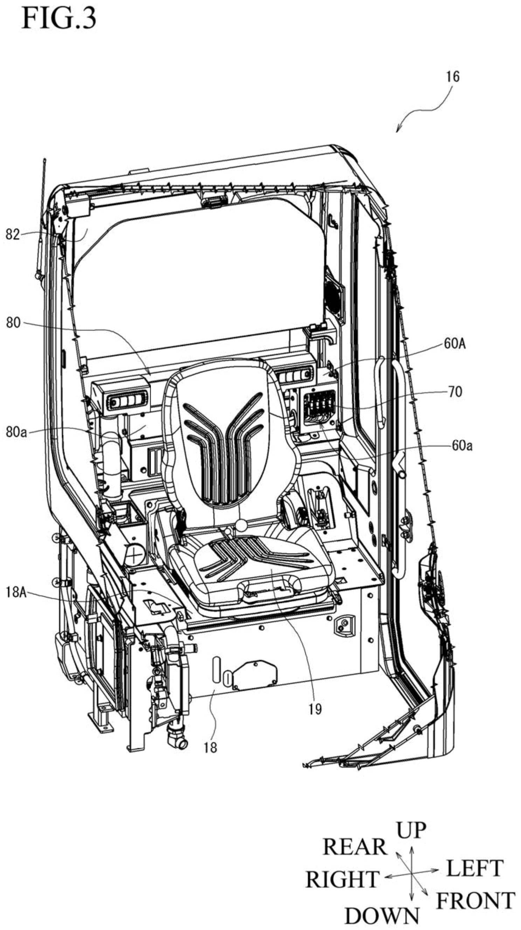

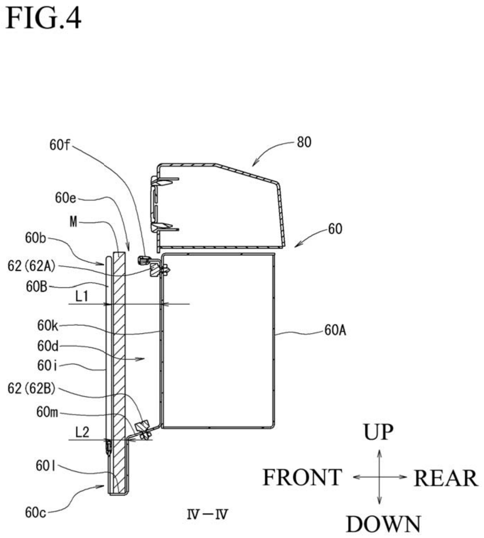

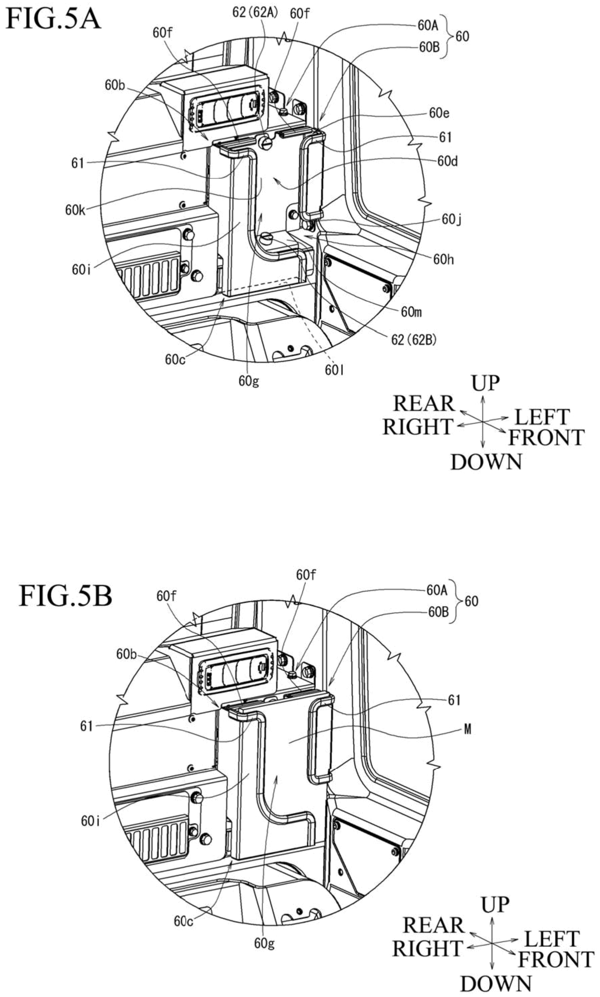

Also, the cabin 16 has a fuse box 60 within which a fuse 70 for an electrical component is accommodated. The target electrical component is not particularly limited, but in the present embodiment, the fuse is provided for the heater device 80 of the cabin 16 (that is, the fuse 70 is incorporated at a certain point in a cable supplying electric power to the heater device 80). However, the fuse 70 is not limited to being provided for the heater device 80. Fig. 3 is a schematic view (perspective view from above a right front part) showing a state where a cover 60B (described later) of the fuse box 60 in Fig. 2 is removed. The fuse 70 in Fig. 3 is illustrated as an aggregate state where a plurality of fuses (in some case, a distinction is made by referring to a fuse as a "single fuse") are connected to corresponding terminals, respectively (though the number of single fuses is not particularly limited). Fig. 4 is a cross-sectional view along a line IV-IV in Fig. 2. Fig. 5A is an enlarged view of the surroundings of the fuse box 60. Fig. 5B will be described later.

The fuse box 60 according to the present embodiment has a box-shaped main body 60A which is arranged to the side of (at a position adjacent to) the heater device 80 inside the cabin 16 and whose inside is an accommodation space. Also, an opening 60a through which to perform the inspection and the attachment or detachment of the fuse 70 is formed at the front side of the main body 60A. As another example, a configuration in which an opening is provided at the lateral side of the main body 60A may be employed (not illustrated). Also, the cover 60B that can open and close (in the present embodiment, attachable and detachable) in relation to the opening 60a is provided. In the present embodiment, the cover 60B is attached to the fuse box 60, using a manually turnable screw (knurled screw or the like) 62. As an example of this screw 62, a first screw 62A provided near an upper part 60b of the cover 60B, and a second screw 62B provided near a lower part 60c of the cover 60B are provided. Thus, the cover 60B can be attached and detached by manually turning the screw 62 without using a turning tool (screwdriver, wrench or the like) and therefore the work is extremely easy. The attachment and detachment structure of the cover 60B is not limited to the above. For example, instead of the attachment and detachment structure, a structure for opening and closing the opening 60a by a slide mechanism or a hinge mechanism or the like may be employed (not illustrated).

As described above, in the case of a configuration in which the fuse box is installed at a position below the seat (for example, inside the seat box), there is a problem in that detaching the cover from the fuse box and performing the inspection and the attachment and detachment of the fuse while visually checking the inside is very difficult to carry out and takes effort.

However, the above-described configuration can solve the problem. That is, the fuse box 60 can be arranged at a close position obliquely to the rear of the backrest of the seat 19 (the height position is also equivalent to the backrest). Therefore, the worker can carry out the task of visually checking the inside of the fuse box 60 and inspecting and attaching or detaching the fuse 70, very easily and securely.

Moreover, since the fuse box 60 accommodating the fuse 70 for the heater device 80 can be arranged at a position adjacent to the heater device 80, the connection cable therefor can be made shorter.

In the present embodiment, the cover 60B of the fuse box 60 is configured to be used also as a document case. Specifically, a space part 60d for storing a document M is provided in the cover 60B. That is, the cover 60B is formed in a box-like shape and has a front part 60i (wall part on the side opposite to the main body 60A, that is, on the inner side of the cabin 16), a lateral part 60j (in this example, the left lateral part is denoted by the sign), a back part 60k (wall part on the opening 60a side of the main body 60A), and a bottom part 60l. Also, an inlet 60e of the space part 60d is provided at the upper part 60b of the cover 60B. Thus, the document M can be put in from the inlet 60e and stored in the space part 60d. Fig. 5B is a view showing a state where the document M is stored in the cover 60B used also as a document case. The "document" in the present application includes an instruction manual or other documents, or a file or case containing such documents.

As described above, since a position around the seat is normally a narrow space where operation devices are densely arranged, there is a problem in that a document case cannot be installed (or is difficult to install). Also, for example, even if a document case can be installed inside the seat box below the seat, there is a problem in that, when refer to the document M (specifically an instruction manual) during work (between operations), the operator in the state of being seated at the seat cannot (or finds it hard to) open and close a storage door or the like provided on the seat box and take out and put in the document M.

However, the above-described configuration can solve the problem. That is, a document case configured to be also used as the cover 60B of the fuse box 60 can be installed at a position around the seat 19 inside the cabin 16. Particularly, since this document case can be arranged at a close position obliquely to the rear of the backrest of the seat 19 (the height position is also equivalent to the backrest), the operator, even in the state of being seated at the seat 19, can easily take out and put in the document M by twisting the body only slightly sideways. Therefore, the operator can refer to the document M easily and quickly during work.

Also, the document case (cover 60B) according to the present embodiment has the following characteristic configuration. Specifically, the cover 60B is provided with a brim part 60f so as to cover a predetermined area on the side where the above-described first screw 62A is provided (that is, on the back part 60k side) at the inlet 60e of the space part 60d. Thus, when the operator puts the document M into the space part 60d from the inlet 60e, the lower end part of the document M can be prevented from coming into contact with and thus being blocked by the first screw 62A protruding from the back part 60k, and the lower end part of the document M can also be prevented from being damaged by the operator forcing the document M into the space part 60d. In the present embodiment, the brim part 60f is configured to be split into two parts on the left and right sides in a front view in order to facilitate the turning of the first screw 62A.

Also, the cover 60B is formed such that, with respect to the width in a transverse direction (in the present embodiment, the forward and backward directions) in a horizontal plane of the space part 60d (that is, the width between the front part 60i and the back part 60k), a width L2 at a position near the lower part 60c is smaller than a width L1 at a position near the upper part 60b (L1>L2). That is, at the back part 60k of the cover 60B, a step 60m where the width in the transverse direction of the space part 60d changes is formed. Thus, the lower part of the document M can be held at the position of the width L2 in the space part 60d, thus having an effect in that the document M does not become unstable even if vibration or tilting occurs at the time of work.

Moreover, at the upper surface of the step 60m, the above-described second screw 62B is arranged such that a direction slightly tilting from the vertical direction (or may be the vertical direction) is the axial direction of screwing. Thus, the risk that a distal end part (end part on the entry side) of the second screw 62B may be damaged by coming into contact with cables or the like inside the main body 60A can be reduced as compared with the case of being arranged such that the axial direction of screwing is the horizontal direction.

Also, an opening 60g extending in the direction in which the document is taken out and put in is formed at a center part in a longitudinal direction (in the present embodiment, the left and right directions) in the front part 60i of the cover 60B. Thus, what kind of document M is stored in the space part 60d can be visually checked more easily and this document M can be taken out more easily. Moreover, the first screw 62A and the second screw 62B can be attached and detached more easily.

Also, a cut-out part 60h provided by cutting out a predetermined area extending from the bottom part 60l to the lateral part 60j (in the present embodiment, the left lateral part) is formed on one side of a lower end part of the cover 60B. Thus, even if dust or the like is accumulated inside the space part 60d (particularly at the bottom part 60l), the dust or the like can be easily discharged from the cut-out part 60h.

Also, in the cover 60B, a trim part 61 made of rubber or resin or the like is attached to the edge of the front part 60i. Thus, the edge of the front part 60i (end part of the plate member) is prevented from damaging the operator's hand or the document, and the cover 60B can be used as a document case safely and without damaging the document.

The other mechanisms for traveling and work in the working vehicle 1 according to the present embodiment are similar to those in a known working vehicle (hydraulic excavator) and therefore the detailed description thereof is omitted.

As described above, it is preferable that the present invention includes the configurations given below.
(1) A working vehicle according to an embodiment is a working vehicle including a cabin provided with a seat on which an operator sits, wherein the cabin has therein a fuse box in which a fuse of an electrical component is accommodated, the fuse box has a main body whose inside is an accommodation space, has an opening formed at a front side or a lateral side of the main body for carrying out an inspection and attachment and detachment of the fuse, and is provided with a cover that can open and close in relation to the opening, the cover is provided with a space part for storing a document and is configured to be used also as a document case, and the space part is defined between a back part of the cover, which is on a distal side from the seat, and a front part of the cover, which is on a proximal side from the seat.
(2) In the working vehicle according to the above aspect (1), it is preferable that the cover is attached to the main body in an attachable and detachable manner, using a manually turnable screw.
(3) In the working vehicle according to the above aspect (2), it is preferable that the cover is provided with a brim part covering a predetermined area on the side of the back part where a first screw provided as the screw at an upper end part is arranged, at an inlet of the space part.
(4) In the working vehicle according to any one of the above aspects (1) to (3), it is preferable that the cover is formed such that a width between the back part and the front part in the space part is smaller at a lower-side position than at an upper-side position.
(5) In the working vehicle according to any one of the above aspects (1) to (4), it is preferable that an opening extending in a direction in which the document is taken out and put in is formed in the front part of the cover.
(6) In the working vehicle according to any one of the above aspects (1) to (5), it is preferable that a cut-out part provided by cutting out a predetermined area extending from a bottom part to a lateral part is formed on one side of a lower end part of the cover.
(7) In the working vehicle according to the above aspect (2) or (3), it is preferable that a step where a width between the back part and the front part in the space part changes is formed at the back part of the cover, and that a second screw provided as the screw at a position from a lower end part to a middle part is arranged at an upper surface of the step such that a vertical direction or a direction tilting from the vertical direction is an axial direction of the second screw.
(8) In the working vehicle according to any one of the above aspects (1) to (7), it is preferable that the fuse is provided for a heater device and that the heater device and the fuse box are arranged at a rear position inside the cabin.
(9) In the working vehicle according to any one of the above aspects (1) to (8), it is preferable that a trim part is attached to an edge of the front part of the cover.

According to the present invention, even in the case where the number of electrical devices installed is increased and the number of fuses is increased, the case where the fuses are increased in size, or the case where the working vehicle is reduced in size or the like, a space for installing the fuse box for accommodating the fuses and the document case formed by the cover of the fuse box can be secured inside the cabin.

Particularly, since the fuse box and the document case can be installed at a position around the seat inside the cabin, specifically, at a position near the backrest of the seat, the maintenance of the fuses can be carried out easily and a document can be taken out and put in easily.

The present invention is not limited to the above-described embodiment (hydraulic excavator). For example, while a hydraulic excavator has been described as an example of the working vehicle, the present invention can be similarly applied to other working vehicles (track loader or the like) having a cabin.

## Claims

1. A working vehicle (1) comprising a cabin (16) provided with a seat (19) on which an operator sits, wherein
the cabin (16) has therein a fuse box (60) in which a fuse (70) of an electrical component is accommodated,
the fuse box (60) has a main body (60A) whose inside is an accommodation space, has an opening (60a) formed at a front side or a lateral side of the main body (60A) for carrying out an inspection and attachment and detachment of the fuse (70), and is provided with a cover (60B) that can open and close in relation to the opening (60a),
the cover (60B) is provided with a space part (60d) for storing a document and is configured to be used also as a document case, and
the space part (60d) is defined between a back part (60k) of the cover (60B), which is on a distal side from the seat (19), and a front part (60i) of the cover (60B), which is on a proximal side from the seat (19).

2. The working vehicle (1) according to claim 1, wherein
the cover (60B) is attached to the main body (60A) in an attachable and detachable manner, using a manually turnable screw (62).

3. The working vehicle (1) according to claim 2, wherein
the cover (60B) is provided with a brim part (60f) covering a predetermined area on the side of the back part (60k) where a first screw (62A) provided as the screw (62) at an upper end part is arranged, at an inlet of the space part (60d).

4. The working vehicle (1) according to any one of claims 1 to 3, wherein
the cover (60B) is formed such that a width between the back part (60k) and the front part (60i) in the space part (60d) is smaller at a lower-side position than at an upper-side position.

5. The working vehicle (1) according to any one of claims 1 to 4, wherein
an opening (60g) extending in a direction in which the document is taken out and put in is formed in the front part (60i) of the cover (60B).

6. The working vehicle (1) according to any one of claims 1 to 5, wherein
a cut-out part (60h) provided by cutting out a predetermined area extending from a bottom part (60l) to a lateral part (60j) is formed on one side of a lower end part of the cover (60B).

7. The working vehicle (1) according to claim 2 or 3, wherein
a step (60m) where a width between the back part (60k) and the front part (60i) in the space part (60d) changes is formed at the back part (60k) of the cover (60B), and a second screw (62B) provided as the screw (62) at a position from a lower end part to a middle part is arranged at an upper surface of the step (60m) such that a vertical direction or a direction tilting from the vertical direction is an axial direction of the second screw.

8. The working vehicle (1) according to any one of claims 1 to 7, wherein
the fuse (70) is provided for a heater device (80), and
the heater device (80) and the fuse box (60) are arranged at a rear position inside the cabin (16).

9. The working vehicle (1) according to any one of claims 1 to 8, wherein
a trim part (61) is attached to an edge of the front part (60i) of the cover (60B).
